# EUROPÄISCHE PATENTSCHRIFT

(11) **EP 2 492 653 B1**
(45) Veröffentlichungstag und Bekanntmachung des Hinweises auf die Patenterteilung: **12.04.2017**
(21) Anmeldenummer: 12001149.9
(22) Anmeldetag: 21.02.2012
(51) Int. Cl.: G01G 21/22, G01G 21/23, G01G 21/28, G01G 19/414

(54) **Waage**
Scales
Balance

(30) Priorität: 23.02.2011 DE 102011012195
(43) Veröffentlichungstag der Anmeldung: 29.08.2012
(73) Patentinhaber: Bizerba SE & Co. KG, 72336 Balingen (DE)
(72) Erfinder: Hofmann, Bernd, 72461 Albstadt (DE); Merz, Roland, 72459 Albstadt (DE); Schumacher, Volker, 72414 Rangendingen (DE)
(74) Vertreter: Huber, Meik

(56) Entgegenhaltungen:
- US-A- 5 637 837

## Beschreibung

Die Erfindung betrifft eine Waage nach den Merkmalen des Anspruchs 1.

In der Praxis sind Ladenwaagen bekannt, die insbesondere im Frischeverkauf von Lebensmitteln zum Einsatz kommen.

In der EP 0 327 182 B1 ist eine solche Waage gezeigt. Dort wird eine Waage unterhalb einer Thekenplatte einer Verkaufstheke angeordnet. Eine abnehmbare Lastplatte greift durch vier abgedichtete Durchlässe in der Thekenplatte hindurch und kann zu Reinigungszwecken abgenommen werden. Diese Lösung benötigt einen baulichen Eingriff in die Theke. Sie ist also konstruktiv relativ aufwändig und zudem kann die Waage nicht optimal gereinigt werden.

Aus der DE 21 61 308 ist eine Ladenwaage bekannt, die auf einer erweiterten Stellfläche einer Kühltheke platziert werden kann.

Der Erfindung liegt die Aufgabe zugrunde, eine Waage zu schaffen, die im Frischeverkauf eingesetzt werden kann, die konstruktiv einfach aufgebaut und dabei gut zu reinigen ist.

Diese Aufgabe wird erfindungsgemäß durch eine Waage mit den Merkmalen des Anspruchs 1 gelöst.

Die Wägezelle weist eine Wiegeposition und eine Reinigungsposition auf. Eine Schale haltert die Wägezelle. In der Wiegeposition ist die Wägezelle fest mit der Schale verbunden und kann die über eine Lastplatte auf die Wägezelle geleitete Gewichtskraft messen. Die Wägezelle ist um eine Schwenkachse drehbar und kann so einfach zu Reinigungszwecken verschwenkt und in eine Reinigungsposition verbracht werden. Dadurch kann in der Schale auch der Bereich unterhalb der Wägezelle einfach gereinigt werden. Eine Lastplatte ist zum Auflegen von Wiegegut mit der Wägezelle verbunden. Um eine gute Reinigung zu ermöglichen, kann die Lastplatte abgenommen und separat, beispielsweise in einer Spülmaschine gereinigt werden.

Um eine besonders kompakte oder flache Ausführung zu erhalten ist vorgesehen, dass die Wägezelle vollständig innerhalb des von der von der Schale definierten Bauraums angeordnet ist. Die Schale weist vorzugsweise eine Bodenplatte auf, die an wenigstens drei Seiten von jeweils einer Seitenwand begrenzt ist. Somit kann die Schale als Gehäuse für die Waage dienen. Insbesondere ist die Schale als Einbaugehäuse ausgebildet, indem die Schale in eine Fläche einer Ladentheke oder eines Verkaufsstands zumindest teilweise eingelassen ist um ein ästhetisch ansprechendes Erscheinungsbild zu schaffen.

Erfindungsgemäß ist vorgesehen, dass in einer oder zwei gegenüberliegenden Seitenwänden eine Kulissenführung angeordnet ist, welche die Schwenkachse der Wägezelle lagert. Durch lineares Verschieben der Wägezelle innerhalb der Kulissenführung, kann diese von der Wiegeposition in die Reinigungsposition verbracht werden. In der Reinigungsposition kann dann die Wägezelle verschwenkt werden.

Es ist vorzugsweise vorgesehen, dass in der Wiegeposition die Kulissenführung als Verriegelungsvorrichtung wirkt, indem die Schwenkachse mit der Kulissenführung zum Fixieren der Wägezelle bzw. zum Sperren des Schwenkvorganges zusammenwirkt. So ist es möglich, dass die Wägezelle in der Wiegeposition kraftschlüssig mit der Schale verbunden ist, wodurch ein exaktes Messen des Gewichts von Wiegegut ermöglicht wird. Die Wägezelle ist damit in der Reinigungsposition um eine Schwenkachse drehbar gelagert und in der Wiegeposition drehfest gelagert.

In einer Ausführung ist vorgesehen, dass die Schale mit einer Unterlage oder einem Unterbau, vorzugsweise einer Tischoberfläche oder einer Thekenoberfläche mechanisch fest verbunden ist. Die Verbindung kann durch Verschrauben oder Verkleben oder auch durch eine manuell lösbare Rastverbindung oder Klemmverbindung erfolgen.

Um eine geringe Bauhöhe zu erreichen kann vorgesehen sein, dass der Unterbau oder die Unterlage eine Aussparung aufweist, welche den Abmessungen der Schale entspricht, so dass diese innerhalb der Aussparung angeordnet und dabei zumindest teilweise in die Unterlage bzw. in eine Tischplatte oder in eine Theke integriert ist. Vorzugsweise ist die Seitenwand der Schale so ausgeführt, dass sie gegenüber der Oberfläche der Unterlage erhöht ist, und somit einen Rand ausbildet. Dadurch wird zum einen die Verschmutzung der Wägezelle reduziert, da Schmutz von der Oberfläche der Unterlage nicht direkt in das Innere der Schale gelangen kann. Zum anderen wird ein möglicher Kraftschluss des Wiegeguts mit der Unterlage verhindert, da dieses um den Rand erhöht über der Oberfläche der Unterlage angeordnet ist.

Es ist in einer Ausführung vorgesehen, dass eine abnehmbare Lastplatte zumindest teilweise innerhalb der Schale angeordnet ist, indem Die Lastplatte zumindest mit ihrer Unterseite in den durch die Schale definierten Bauraum eingreift. Um ein problemloses Einsetzen der Lastplatte in die Schale zu ermöglichen ist vorgesehen, dass die Wägezelle eine Zentriervorrichtung aufweist, welche die Lastplatte so zentriert, dass diese mittig auf der Wägezelle angeordnet, bzw. von den Seitenwänden der Schale beabstandet angeordnet ist. Die Zentriervorrichtung kann mit der Lastplatte zusammenwirkende Bolzen oder Führungsstifte aufweisen, die die Lastplatte beim Aufsetzen automatisch zentrieren.

In einer Ausführung ist vorgesehen, dass die Lastplatte eine schnittfeste Oberfläche aufweist. So kann die Lastplatte zugleich als Schneidunterlage für Wiegegut dienen. Von Vorteil ist, wenn die Lastplatte in Ihrer Oberfläche eine eingearbeitete Saftrille aufweist, um beispielsweise den beim Schneiden oder Wiegen von Fleisch austretenden Saft aufzufangen. Die Lastplatte kann aus einem Holz, aus einem Kunststoff oder auch aus Marmor ausgebildet sein. Es ist auch vorgesehen, verschiedene, gegeneinander austauschbare Lastplatten einzusetzen. Über eine Tarafunktion kann die Waage dann jeweils einfach auf diese Lastplatten justiert werden.

Eine Anwendung der Waage ist insbesondere im Frischeverkauf von Lebensmitteln wie Fleisch, Wurst oder Käse vorgesehen. Durch die flache Bauform in Verbindung mit der reinigungsfreundlichen Ausführung kann die Waage vor allem im Thekenbereich an oder in einer Verkaufstheke eingesetzt werden. Die Anzeige von Wägedaten und oder der Druck eines Bons kann dabei über örtlich von der Waage abgesetzte Module, insbesondere Bedienterminals oder Drucker erfolgen, die mit der Waage über eine Kabelverbindung oder Funkverbindung verbunden sind.

Weitere Ausführungsbeispiele der Erfindung sind in den Figuren dargestellt und der dazugehörenden Beschreibung beschrieben.

Es zeigen,
- Figur 1:: Eine Draufsicht auf eine Ausführung der erfindungsgemäßen Waage;
- Figur 2:: Eine perspektivische Ansicht einer erfindungsgemäßen Waage;
- Figur 3:: Eine schematische Explosionsdarstellung der in Figur 2 gezeigten Waage;
- Figur 4:: Einen vergrößerten Ausschnitt im Bereich der Schwenkachse.

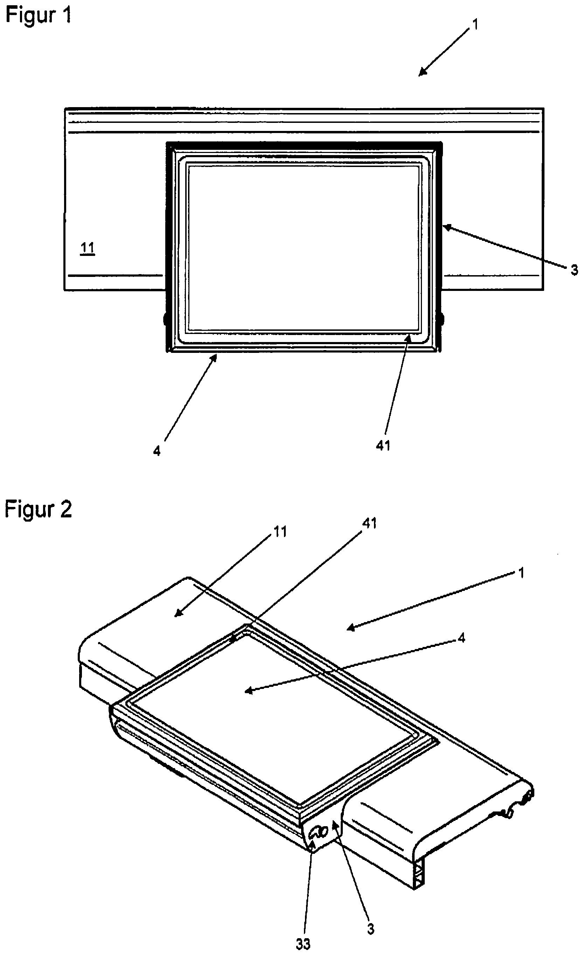

In der Figur 1 und der Figur 2 ist eine Waage 1 in der Wiegeposition dargestellt. Sie ist mit einem Thekenbrett 11 als Unterlage fest verbunden. Die Waage 1 weist als Gehäuse eine Schale 3 auf, die in einer Aussparung des Thekenbretts 11 aufgenommen ist. Die Schale 3 wird nach oben hin durch eine Lastplatte 4 abgeschlossen. Auf die Lastplatte 4 kann Wiegegut zum wiegen aufgelegt werden. An ihrer Oberseite weist die Lastplatte 4 eine eingefräste Saftrille auf, die aus dem Wiegegut austretenden Saft auffängt und so verhindert, dass dieser in die Schale 3 fließt. Eine Anzeige des Gewichts und /oder Steuerung der Waage 1 erfolgt an einer nicht dargestellten, örtlich abgesetzten Bedien- und Anzeigeeinrichtung, welche über eine Kabelverbindung mit der Waage 1 verbunden ist.

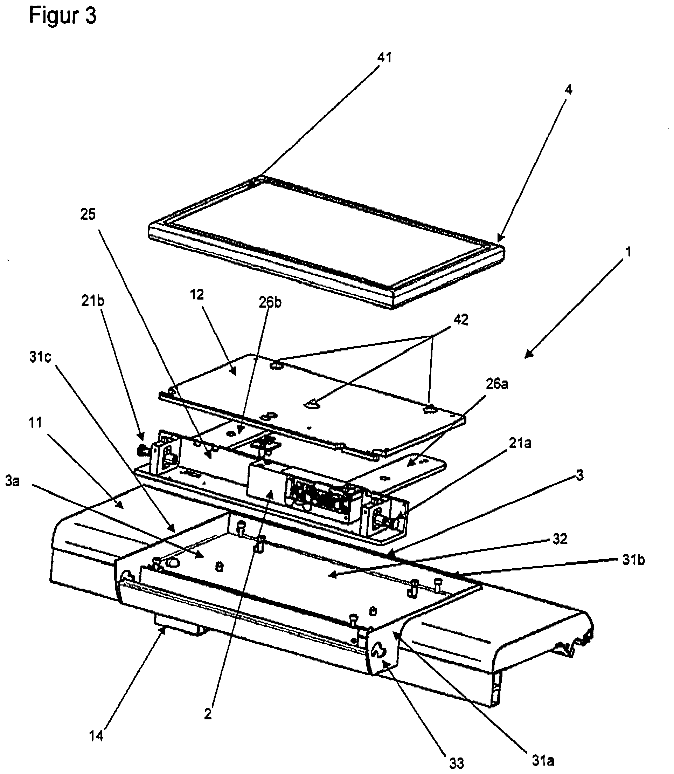

Wie in der Explosionsdarstellung der Figur 3 dargestellt, sind um die Lastplatte 4 herum an drei Seiten geschlossen umlaufend die Seitenwände 31 der Schale 3 angeordnet. Diese Seitenwände 31 bilden einen an ihrer Oberseite einen Rand aus, der das Innere der Schale gegen das Thekenbrett 11 abgrenzt. Der Rand 31 ist gegenüber der Oberfläche des Thekenbretts 11 erhöht ausgebildet. Die Schale 3 weist an der Unterseite eine geschlossene Bodenplatte 32 auf, die die Seitenwände miteinander verbindet. Über eine lösbare Klemmvorrichtung 14 ist die Bodenplatte 32 fest mit der Unterlage 11 verbunden.

Die Schale 3 weist an ihren einender gegenüberliegenden Seitenwänden jeweils eine Kulissenführung 33 auf, welche die Schwenkachse A der Wägezelle 2 führen. Zwei Steckachsen 21a und 21b der Wägezelle 2 greifen dazu in die Kulissenführung 33 ein. Auf Enden der den Steckachsen 21a, 21b sitzt jeweils ein Pilzkopf 22, der die seitliche Führung der Wägezelle 2 gewährleistet. Über ein Halteprofil 25 der Wägezelle 2 sind die beiden Steckachsen miteinander verbunden.

Das Halteprofil 25 dient der Lastverteilung der auf die Wägezelle wirkenden Gewichtskraft. Dazu weist das Halteprofil 25 dazu zwei nach vorne auskragende Lastarme 26a, 26b auf, die als Auflager für eine Lastverteilplatte 12 dienen. Die Lastverteilplatte 12 trägt die Lastplatte 4. An der Oberseite der Lastverteilplatte 12 sind als Zentriervorrichtung für die Lastplatte 4 drei Kegel 42 angeordnet, welche mit ihren schrägen Flächen in entsprechende Öffnungen an der Unterseite der Lastplatte 4 eingreifen und diese so beim Aufsetzen auf die Lastverteilplatte 12 automatisch justieren.

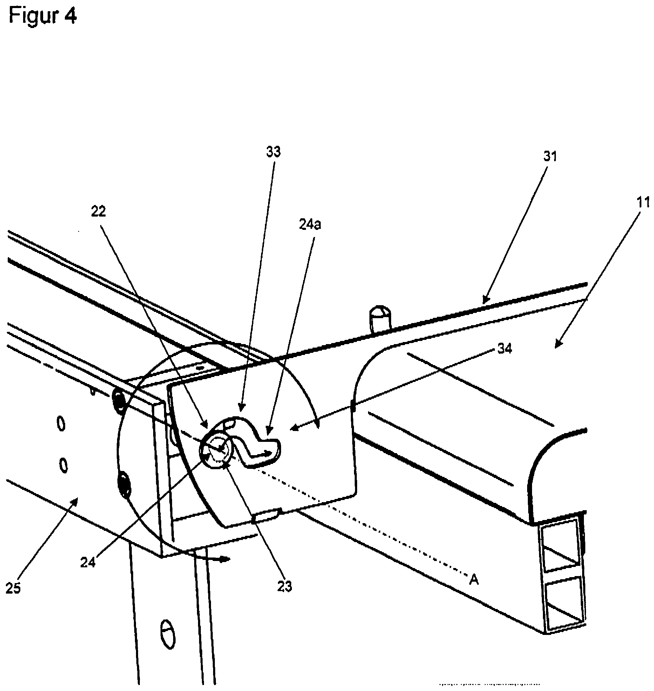

In der Figur 4 ist ein vergrößerter Ausschnitt des Bereichs um die Kulissenführung 33 gezeigt. Die in der Figur 4 dargestellte Position entspricht einer Reinigungsposition der Wägezelle 2, wobei diese zugleich entgegen des Uhrzeigersinns um die Schwenkachse A geschwenkt wurde. Die Wiegeposition der Wägezelle entspricht der in Figur 4 durch den Verfahrpfeil in der Kulissenführung 33 angezeigten vorderen Position.

Die in die Kulissenführung 33 eingreifenden Steckachsen 21a und 21b weisen jeweils an ihrer in die Kulissenführung 33 eingreifenden Umfangsfläche eine in Figur 4 gestrichelt dargestellte runde Kontur 23 und eine gerade Kontur 24 auf. In der vorderen Wiegeposition wirkt die gerade Kontur 24 mit der Kontur der Kulissenführung zum Verriegeln des Schwenkvorganges zusammen. Durch die gerade Kontur der Führungsflächen wird in der Wiegeposition eine formschlüssige Halterung erzielt und ein Schwenken unterbunden. Zudem wird die Wägezelle durch die Kulissenführung 33 kraftschlüssig in der Seitenwand 31 der Schale 3 gehaltert.

Das Verbringen der Wägezelle 2 von der Wiegeposition in die Reinigungsposition geschieht indem diese zunächst bei abgenommener Lastplatte 4 entlang des dargestellten Pfeils aus der Schale 3 heraus verfahren wird. Dadurch kommt die gerade Kontur der Kulissenführung 33 außer Eingriff mit der geraden Kontur 24 der Steckachsen 21a und 21b und ein Schwenken der Wägezelle um die Schwenkachse A wird ermöglicht. Durch das anschließende Schwenken der Wägezelle 2 entgegen dem Uhrzeigersinn kann die Wägezelle 2, insbesondere deren Halteprofil 25 und Lastarme 26a, 26b und Lastverteilplatte 12, komplett aus der Schale 3 ausgeschwenkt werden, so dass diese einfach und ohne störende Teile zu reinigen ist.

Die Lastplatte 4 ist abnehmbar und kann als massive Holzplatte, Kunststoffplatte oder als Marmorplatte ausgebildet sein. Damit kann unter gestalterischen Gesichtspunkten die jeweils passende Lastplatte verwendet werden. Es ist auch vorgesehen, aus einem Sortiment verschiedene gegeneinander austauschbare Lastplatten 4 einzusetzen. Das unterschiedliche Gewicht der einzelnen Lastplatten wird über eine Tarafunktion an der Waage ausgeglichen.

## Patentansprüche

1. Waage, insbesondere Ladenwaage, mit einer Wägezelle (2) zum Erfassen des Gewichts von Wiegegut und einer mit dieser zusammenwirkenden und abnehmbaren Lastplatte (4) zum Auflegen von Wiegegut, und einer Schale (3), wobei die Wägezelle (2) innerhalb der Schale (3) angeordnet ist, die einen Bauraum (32) umschließt der von einem flachen Bodenabschnitt (3a) und von wenigstens drei Seitenwänden (31a, 31b, 31c) begrenzt ist,
und die Wägezelle (2) eine Wiegeposition und eine Reinigungsposition aufweist und in der Reinigungsposition um eine Schwenkachse (A) drehbar gelagert ist,
**dadurch gekennzeichnet,**
**dass** wenigstens eine Seitenwand (31a, 31c) der Schale (3) eine Kulissenführung (33) zum Lagern der Wägezelle (2) aufweist, wobei die Schwenkachse (A) der Wägezelle in der Kulissenführung (33) gelagert und die Wägezelle durch Verschieben in der Kulissenführung (33) von der Wiegeposition in die Reinigungsposition verbringbar ist.

2. Waage nach Anspruch 1,
**dadurch gekennzeichnet,**
**dass** die Wägezelle (2) vollständig in dem Bauraum (32) aufgenommen ist.

3. Waage nach Anspruch 1 oder 2,
**dadurch gekennzeichnet,**
**dass** eine Verriegelungsvorrichtung (34) die Wägezelle (2) in der Wiegeposition gegen Schwenken arretiert indem die Verriegelungsvorrichtung (34) direkt mit der Schwenkachse (A) zusammenwirkt.

4. Waage nach einem der vorhergehenden Ansprüche,
**dadurch gekennzeichnet,**
**dass** die in die Kulissenführung (33) eingreifende Umfangsfläche der Schwenkachse einen Abschnitt mit einer runden Kontur (23) und einen Abschnitt mit einer geraden Kontur (24) aufweist und die gerade Kontur in der Wiegeposition mit der Kulissenführung (33) zum Verriegeln der Schwenkbewegung zusammenwirkt.

5. Wiegesystem umfassend eine Waage nach einem der vorhergehenden Ansprüche und eine Unterlage (11),
**dadurch gekennzeichnet,**
**dass** die Schale (3) mit der Unterlage (11),
vorzugsweise einer Ladentheke oder einer Tischplatte, mechanisch fest verbunden ist.

6. Wiegesystem nach Anspruch 5,
**dadurch gekennzeichnet,**
**dass** die Schale (3) mit der Unterlage (11) über eine manuell lösbare Rastverbindung oder Klemmverbindung (14) mechanisch fest verbunden ist.

7. Wiegesystem nach Anspruch 5 oder 6,
**dadurch gekennzeichnet,**
**dass** die Unterlage (11) eine der Längserstreckung oder der Breitenerstreckung der Schale (3) entsprechende Aussparung aufweist und die Schale (3) zumindest teilweise innerhalb dieser Aussparung aufgenommen ist.

8. Wiegesystem nach Anspruch 7,
**dadurch gekennzeichnet,**
**dass** die Schale (3) einen Rand (31) aufweist, indem die Seitenwand (31a, 31b, 31c) der Schale (3) gegenüber der Unterlage (11) erhöht ausgebildet ist.

9. Waage nach einem der vorhergehenden Ansprüche,
**dadurch gekennzeichnet,**
**dass** die abnehmbare Lastplatte (4) zumindest teilweise innerhalb der Schale (3) aufgenommen und beabstandet zu dem Rand (31) angeordnet ist.

10. Waage nach einem der vorhergehenden Ansprüche,
**dadurch gekennzeichnet,**
**dass** die Wägezelle (2) eine Zentriervorrichtung (42) aufweist, mittels derer die Lastplatte (4) passgenau in die Schale (3) einsetzbar ist.

11. Waage nach einem der vorhergehenden Ansprüchen,
**dadurch gekennzeichnet,**
**dass** die Lastplatte (4) aus einem Metall, oder Kunststoff oder Holz oder Marmor einstückig ausgebildet ist.

12. Waage nach Anspruch 11,
**dadurch gekennzeichnet,**
**dass** die Auflagefläche der Lastplatte (4) als Schneidbrett ausgebildet ist, indem die Lastplatte eine in die Auflagefläche eingearbeitete Saftrille (41) aufweist.

## Claims

1. Scales, in particular retail scales, having a load cell (2) for detecting the weight of goods to be weighed and a loading platform (4), which interacts with the latter and can be removed, for the placement of goods to be weighed, and a tray (3), the load cell (2) being arranged within the tray (3), which encloses a space (32) which is delimited by a flat bottom section (3a) and by at least three side walls (31a, 31b, 31c), and the load cell (2) having a weighing position and a cleaning position and, in the cleaning position, being mounted such that it can rotate about a pivot axis (A),
**characterized in that**
at least one side wall (31a, 31c) of the tray (3) has a slotted guide (33) for supporting the load cell (2), wherein the pivot axis (A) of the load cell is mounted in the slotted guide (33) and the load cell can be moved from the weighing position into the cleaning position by displacement in the slotted guide (33).

2. Scales according to Claim 1,
**characterized in that**
the load cell (2) is accommodated completely in the space (32).

3. Scales according to Claim 1 or 2,
**characterized in that**
a locking device (34) locks the load cell (2) in the weighing position against pivoting, by the locking device (34) interacting directly with the pivot axis (A).

4. Scales according to one of the preceding claims,
**characterized in that**
the peripheral surface of the pivot axis that engages in the slotted guide (33) has a section with a round contour (23) and a section with a straight contour (24), and, in the weighing position, the straight contour interacts with the slotted guide (33) to lock the pivoting movement.

5. Weighing system comprising scales according to one of the preceding claims and a base (11),
**characterized in that**
the scales (3) are firmly mechanically connected to the base (11), preferably a retail counter or a table-top.

6. Weighing system according to Claim 5,
**characterized in that**
the scales (3) are firmly mechanically connected to the base (11) via a manually releasable latching connection or clamping connection (14).

7. Weighing system according to Claim 5 or 6,
**characterized in that**
the base (11) has a cut-out corresponding to the longitudinal extent or the transverse extent of the tray (3), and the tray (3) is at least partly accommodated within this cut-out.

8. Weighing system according to Claim 7,
**characterized in that**
the tray (3) has a rim (31), **in that** the side wall (31a, 31b, 31c) of the tray (3) is designed to be elevated with respect to the base (11).

9. Scales according to one of the preceding claims,
**characterized in that**
the removable loading platform (4) is at least partly accommodated within the tray (3) and is arranged at a distance from the rim (31).

10. Scales according to one of the preceding claims,
**characterized in that**
the load cell (2) has a centring device (42), by means of which the loading platform (4) can be inserted with an accurate fit into the tray (3).

11. Scales according to one of the preceding claims,
**characterized in that**
the loading platform (4) is formed in one piece from a metal, or plastic or wood or marble.

12. Scales according to Claim 11,
**characterized in that**
the supporting surface of the loading platform (4) is formed as a cutting board, **in that** the loading platform has a juice groove (41) machined into the supporting surface.

## Revendications

1. Balance, notamment pèse-charge, avec une cellule de pesée (2) pour déterminer le poids d'un produit à peser et avec une plaque de charge (4) interagissant avec elle et pouvant être retirée d'elle pour placer dessus le produit à peser et avec une coque (3), la cellule de pesée (2) étant disposée à l'intérieur de la coque (3), définissant un encombrement (32) délimité par une section de fond (3a) plate et par au moins trois parois latérales (31a, 31b, 31c) et la cellule de pesée (2) comportant une position de pesée et une position de nettoyage et étant disposée de façon à pouvoir tourner dans la position de nettoyage autour d'un axe de pivotement (A), **caractérisée en ce qu'**au moins une paroi latérale (31a, 31c) de la coque (3) comporte un guide à coulisse (33) pour loger la cellule de pesée (2), l'axe de pivotement (A) de la cellule de pesée étant disposé dans le guide à coulisse (33) et la cellule de pesée pouvant être amenée par coulissement dans le guide à coulisse (33), de la position de pesée dans la position de nettoyage.

2. Balance selon la revendication 1, **caractérisée en ce que** la cellule de pesée (2) est entièrement logée dans l'encombrement (32).

3. Balance selon la revendication 1 ou 2, **caractérisée en ce qu'**un dispositif de verrouillage (34) bloque la cellule de pesée (2) dans la position de pesée pour l'empêcher de pivoter en amenant le dispositif de verrouillage (34) à interagir directement avec l'axe de pivotement (A).

4. Balance selon l'une quelconque des revendications précédentes, **caractérisée en ce que** la surface périphérique de l'axe de pivotement s'imbriquant dans le guide à coulisse (33) comporte une section avec un contour (23) rond et une section avec un contour (24) droit et le contour droit interagit dans la position de pesée avec le guide à coulisse (33) pour verrouiller le mouvement de pivotement.

5. Système de pesée comprenant une balance selon l'une quelconque des revendications précédentes et un support (11), **caractérisé en ce que** la coque (3) est reliée fixement de façon mécanique au support (11), de préférence un comptoir ou une plaque de table.

6. Système de pesée selon la revendication 5, **caractérisé en ce que** la coque (3) est reliée fixement de façon mécanique au support (11) via une liaison encliquetable amovible manuellement ou une liaison serrable (14).

7. Système de pesée selon la revendication 5 ou 6, **caractérisé en ce que** le support (11) comporte un évidement correspondant à l'extension longitudinale ou à l'extension de largeur de la coque (3) et que la coque (3) est logée au moins en partie à l'intérieur de cet évidement.

8. Système de pesée selon la revendication 7, **caractérisé en ce que** la coque (3) comporte un bord (31) **en ce que** la paroi latérale (31a, 31b, 31c) de la coque (3) est relevée par rapport au support (11).

9. Balance selon l'une quelconque des revendications précédentes, **caractérisée en ce que** la plaque de charge (4) amovible est logée au moins en partie à l'intérieur de la coque (3) et est disposée à une certaine distance du bord (31).

10. Balance selon l'une quelconque des revendications précédentes, **caractérisée en ce que** la cellule de pesée (2) comporte un dispositif de centrage (42) à l'aide duquel la plaque de charge (4) peut être insérée par ajustement serré dans la coque (3).

11. Balance selon l'une quelconque des revendications précédentes, **caractérisée en ce que** la plaque de charge (4) est réalisée d'un seul tenant en métal ou en matière plastique ou en bois ou en marbre.

12. Balance selon la revendication 11, **caractérisée en ce que** la surface portante de la plaque de charge (4) est réalisée sous la forme d'une planche de coupe **en ce que** la plaque de charge comporte une rigole de récupération de jus (41) réalisée dans la surface portante.
